Europäisches Patentamt

European Patent Office

Office européen des brevets

(11) Publication number: **0 402 337**
**A2**

## EUROPEAN PATENT APPLICATION

(21) Application number: 90850220.6

(22) Date of filing: 31.05.90

(51) Int. Cl.⁵: **B28D 1/14, E21B 10/00,**
**B23B 51/00**

(30) Priority: 09.06.89 SE 8902082
13.12.89 SE 8904192

(43) Date of publication of application:
**12.12.90 Bulletin 90/50**

(84) Designated Contracting States:
**AT BE DE GB SE**

(71) Applicant: **SANDVIK AKTIEBOLAG**

**S-811 81 Sandviken 1(SE)**

(72) Inventor: **Jansson, Kjell-Ove**
**Vallhovsvägen 136B**
**S-811 37 Sandviken(SE)**
Inventor: **Lundahl, Björn**
**Kolhusvägen 14**
**S-810 41 Forsbacka(SE)**

(74) Representative: **Eriksson, Kjell et al**
**Sandvik AB Patent Department**
**S-811 81 Sandviken(SE)**

(54) **Drill tool.**

(57) The present invention relates to a drill tool for rotary and/or percussive drilling comprising a drill head (10;10″) including a pilot means (11;11″) and a reamer means (12;12″) located behind the pilot means (11;11″) seen in the feed direction of the tool, guide means (16;16′;16″;16‴) to guide said drill tool relative to a casing tube (15;15′) surrounding said guide means (16;16′;16″;16‴), and cooperating driving means (18,19) on the guide means (16;16′;16″;16‴) and the casing tube (15;15′), respectively, for downwards axial displacement of the casing tube (15;15′), and means for connecting said drill tool to a hammer drilling equipment. The invention also relates to a casing tube and a guide means per se.

When drilling through an overburden by a drill tool of the type specified above it quite often happens that the casing tube get stuck by wedge action from loose rock segments or by a sucking action, especially when the overburden consists of clay.

The present invention is characterized in that the casing tube (15;15′) is rotated by cooperating driving means on the guide means (16;16′;16″;16‴) and the casing tube (15;15′).

**Fig.1**

# Drill Tool

The present invention relates to a drill tool for rotary and/or percussive drilling comprising a drill head including a pilot means and a reamer means located behind the pilot means seen in the feed direction of the tool, guide means to guide said drill tool relative to a casing tube surrounding said guide means, and cooperating driving means on the guide means and the casing tube, respectively, for downwards axial displacement of the casing tube, and means for connecting said drill tool to a hammer drilling equipment. The invention also relates to a casing tube and a guide means per se.

When a drill tool as specified above is advanced through the overburden there is often a tendency that the casing tube gets stuck by a wedging action from e.g. loose rock segments or a sucking action, especially if the overburden consists of clay. In order to overcome these problems it is common that the whole drill tool including the casing tube is raised from time to time to eliminate the stuck state of the drill tool. This is of course an unwanted interruption of the drilling activity.

The aim of the present invention is to present a drill tool of the type mentioned above, said drill tool being able to work continuously by eliminating the sticking tendencies of the casing tube. The present invention is realized by a drill tool that has been given the characteristics of the appending claims.

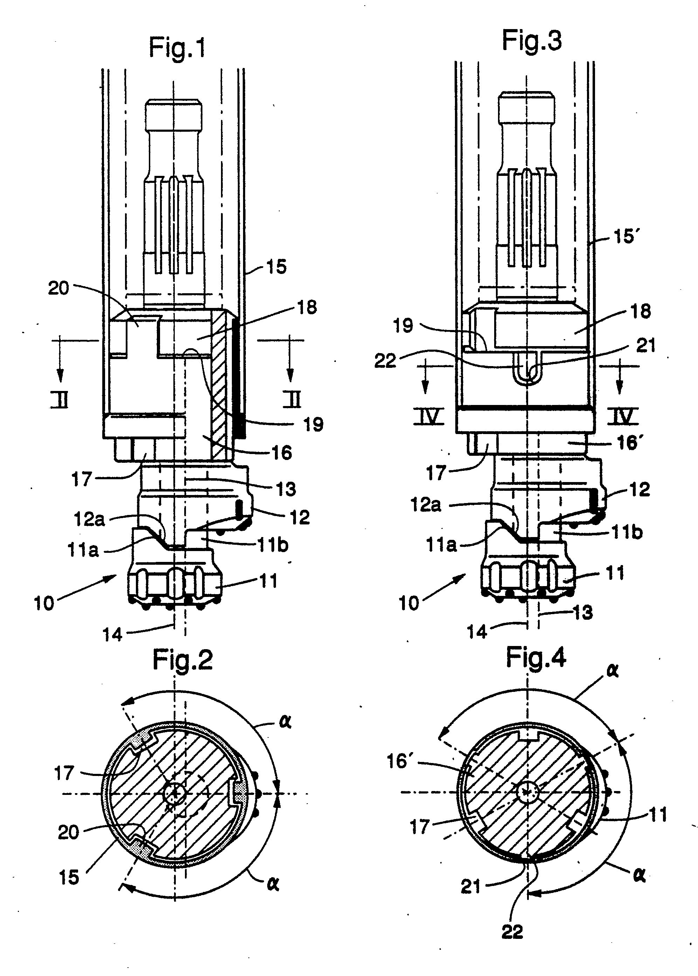

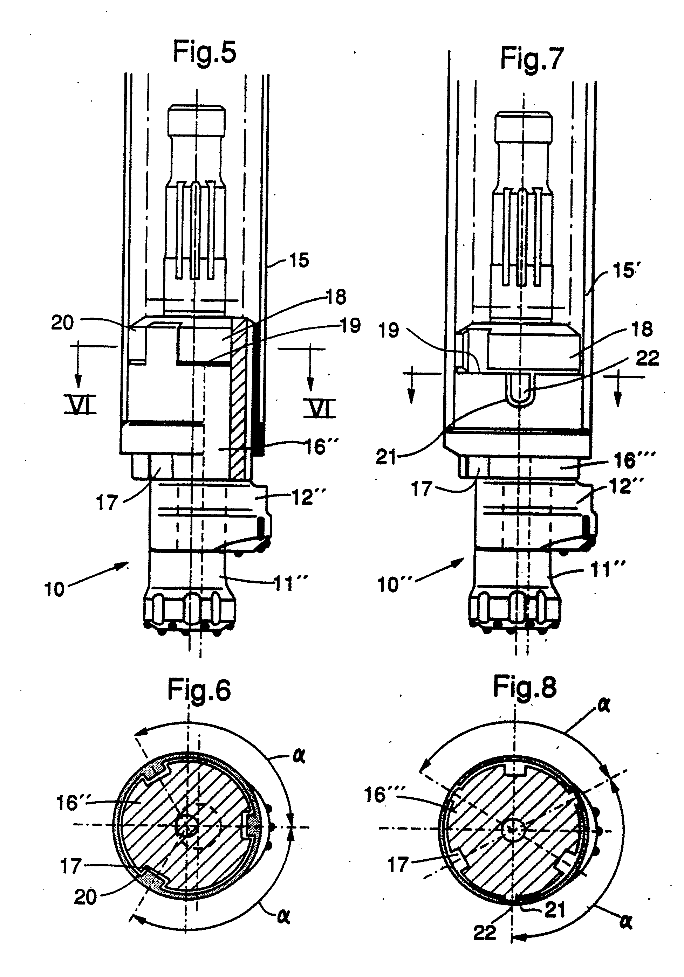

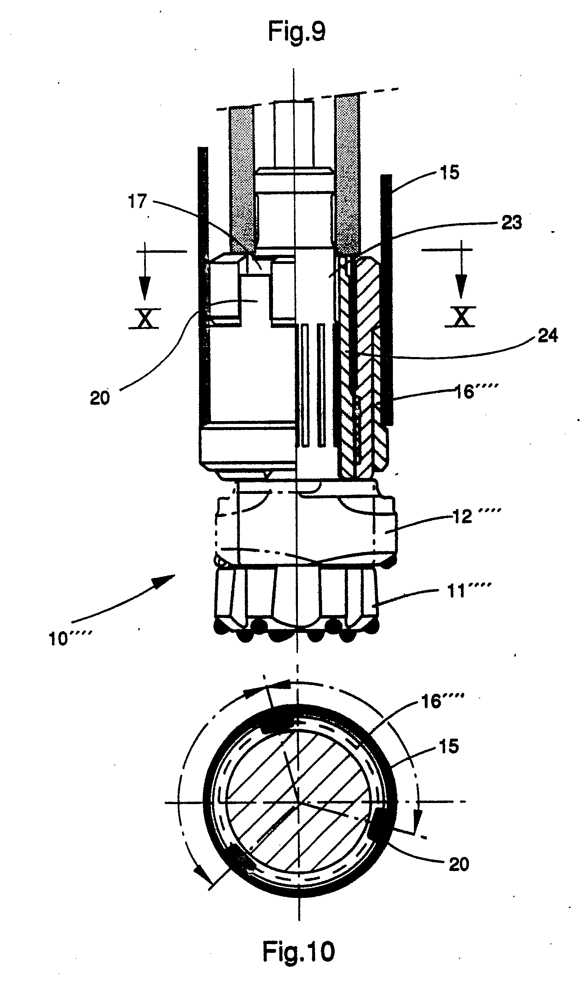

Below four embodiments of the drill tool according to the present invention are described with reference to the accompanying drawings, where Fig.1 discloses a side view, partly cut away, of a drill tool according to the invention; Fig.2 discloses a section along the line II-II in Fig.1; Fig.3 discloses a side view, partly cut away, of an alternative embodiment of a drill tool according to the invention; Fig.4 discloses a section along the line IV-IV in Fig.3; Fig.5 discloses a side view, partly cut away, of a further-alternative embodiment of a drill tool according to the invention; Fig.6 discloses a section along VI-VI in Fig.5; Fig.7 discloses a side view, partly cut away, of a further alternative embodiment of a drill tool according to the invention; Fig.8 discloses a section along VIII-VIII in Fig.7; Fig.9 discloses a side view, partly cut away, of a further alternative embodiment of a drill tool according to the invention; and Fig.10 discloses a section along X-X in Fig.9.

Identical details have been given the same reference numerals throughout all disclosed embodiments.

The drill tool according to Fig.1 includes a drill head 10 including a pilot bit 11 and an eccentric reamer 12 located above the pilot bit 11 in Fig.1. The drill tool further includes an intermediate portion 11b being connected to the pilot bit 11, said intermediate portion 11b having a reduced diameter compared to the pilot bit 11. The intermediate portion 11b has a longitudinal centre axis 13 that is located further eccentrically with respect to the longitudinal centre axis 14 of the pilot bit 11. The intermediate portion 11b is surrounded by the eccentric reamer 12. Also the wall thickness of the reamer varies along its circumference. As is shown in Fig.1 this structural design means that when the reamer 12 is driven by the pilot bit 11 by means of cooperating projections 11a, 12a on the pilot bit 11 and the reamer 12, respectively, the radius of action for the reamer 12 reaches outside a casing tube 15 located above the reamer 12. When the reamer 12 is in a reversed position the pilot bit 10 and the reamer 12 can be pulled up through the casing tube 15.

The intermediate portion 11b, surrounded by the reamer 12, is connected to a guide body 16 located inside the lower portion of the casing tube 15. The guide body 16 is provided with a number of grooves 17 or recesses having an axial extension. These grooves 17 are adapted to remove drilling debris upwardly in Fig.1.

At the upper end of the guide body 16 a flange 18 is provided. Said flange 18 has a bigger diameter than the rest of the guide body 16.

At its lower end the casing tube 15 has a smaller interior diameter than the rest of the casing tube 15. The transition between said portions of the casing tube 15 is in the shape of a shoulder 19 that cooperates with the flange 18 of the guide body 16 when the drill tool according to the invention is driven down. The flange 18 thus drives the casing tube 15 downwards together with the guide body 16.

As is shown in Fig.1 axially extending driving tongues 20 are provided on the inside of the casing tube 15. Said tongues 20 extend from the shoulder 19 of the casing tube 15. The dimensions and location of said tongues 20 are adjusted to make the tongues 20 fit into the grooves 17 of the guide body 16. It is at once understood that the casing tube 15 will be driven when the guide body 16 is rotated.

The tongues 20 have a radial dimension that is smaller than the depth of the grooves 17 thus permitting drilling debris to pass by inside the tongues 20. As is shown in Fig.2 the tongues 20 are spaced apart circumferentially by an equal angle $\alpha$, said angle in the disclosed embodiment being 120°. However, within the scope of invention it is possible to have unequal angles as well as a different number of tongues from what is shown in Fig.2.

The difference between the embodiment according to Figs.3 and 4 and the embodiment according to Figs.1 and 2 is the structural design of the driving means of the casing tube 15'. As is shown in Figs. 3 and 4 the casing tube 15' in its lower portion is provided with axially extending slots 21 that are open in direction from the pilot bit 10. In the disclosed embodiment three slots 21 are provided but the idea of the invention also includes the arrangement of a different number of slots.

The guide body 16' is provided with tongues 22 that are received in the slots 21 when the casing 15' and the guide body 16' are assembled in an operative state. When the drill tool is rotated the tongues 22 of the guide body 16' will drive the casing tube 15' via the slots 21. The number of tongues 22 can of course also vary in a corresponding way as the slots.

The embodiment of the drill tool according to Figs.5 and 6 corresponds in principle to the embodiment according to Figs.1 and 2 with the difference being the design of the drill head 10".

The drill tool according to Fig.5 includes a drill head 10", said drill head 10" having a pilot portion 11" and a reamer portion 12". The pilot portion 11" and the reamer portion 12" constitute one integral unit. The drill head 10" further includes means, preferably a shaft (not shown), for connecting the drill head to a guide body 16" that is surrounded by a casing tube 15. The pilot portion 11" and the reamer portion 12" are rotatable a limited angle relative to the guide body 16". Due to an eccentric connection of the drill head 10" to the guide body 16" the radius of action for the reamer portion 12" reaches outside the casing tube 15 when the drill tool is rotated in a certain direction. However, when the drill tool is rotated in the opposite direction the reamer portion 12" will take a position that allows the drill head 10" to be pulled up through the casing tube 15.

The guide body 16" is provided with a number of grooves 17 or recesses having an axial extension. These grooves 17 are adapted to remove drilling debris upwardly in Fig.5.

At the upper end of the guide body 16" a flange 18 is provided. Said flange 18 has a bigger diameter than the rest of the guide body 16".

At its lower end the casing tube 15 has a smaller interior diameter than the rest of the casing tube 15. The transition between said portions of the casing tube 15 is in the shape of a shoulder 19 that cooperates with the flange 18 of the guide body 16" when the drill tool according to the invention is driven down. The flange 18 thus drives the casing tube 15 downwards together with the guide body 16".

As is shown in Fig.5 axially extending driving tongues 20 are provided on the inside of the casing tube 15. Said tongues 20 extend from the shoulder 19 of the casing tube 15. The dimensions and location of said tongues 20 are adjusted to make the tongues 20 fit into the grooves 17 of the guide body 16". It is at once understood that the casing tube 15 will be driven when the guide body 16" is rotated.

The tongues 20 have a radial dimension that is smaller than the depth of the grooves 17 thus permitting drilling debris to pass by inside the tongues 20. As is shown in Fig.6 the tongues 20 are spaced apart circumferentially by an equal angle $\alpha$, said angle in the disclosed embodiment being 120°. However, within the scope of invention it is possible to have unequal angles as well as a different number of tongues from what is shown in Fig.6.

The embodiment according to Figs.7 and 8 in principle corresponds to the embodiment according to Figs.3 and 4 with the difference being the design of the drill head 10" that has a design corresponding to the design of the drill head 10" according to the embodiment of Figs. 5 and 6.

As is shown in Figs. 7 and 8 the casing tube 15' in its lower portion is provided with axially extending slots 21 that are open in direction from the drill head 10". In the disclosed embodiment three slots 21 are provided but the idea of the invention also includes the arrangement of a different number of slots.

The guide body 16''' is provided with a tongue 22 that is received in the slot 21 when the casing 15' and the guide body 16''' are assembled in an operative state. When the drill tool is rotated the tongue 22 of the guide body 16''' will drive the casing tube 15' via the slot 21.

In the embodiment according to Figs.9 and 10 there is no thread connection between the pilot bit 11'''' and the shaft 23. Also the reamer 12'''' is provided with so called internal driving means. A driver chuck 24 is threadily connected to a cylinder 25 of a down-the-hole hammer. A guide body 16'''' is connected to the chuck 24 by e.g. a thread connection or by welding. The rotation of the chuck 24 must be transmitted to the guide body 16''''. In this embodiment the driving means between the casing tube 15 and the guide body 16'''' is in the shape of tongues 20 of the casing tube 15 that cooperate with grooves 17 of the guide body 16''''.

One advantage of the embodiments according to Figs.1, 2; 5, 6 and 9, 10 resp. compared to the embodiments of Figs.3, 4 and 7, 8 resp. is that the guide body 16; 16" is of standard design while the guide body 16'; 16''' is of a special design due to the provision of the tongues 22.

The invention is not restricted to the embodiments described above but can be varied freely within the scope of the appending claims.

**Claims**

1. A drill tool for rotary and/or percussive drilling comprising a drill head (10;10";10"") including a pilot means (11;11";11"") and a reamer means (12;12";12"") located behind the pilot means (11;11";11""), seen in the feed direction of the tool, guide means (16;16';16";16"';16"",) to guide said drill tool relative to a casing tube (15;15') surrounding said guide means (16;16';16";16"';16""), and cooperating driving means (18,19) on the guide means (16;16';16";16"';16"") and the casing tube (15;15'), respectively, for downwards axial displacement of the casing tube (15;15'), and means for connecting said drill tool to a hammer drilling equipment, **characterized** in that the guide means (16;16';16";16"';16"") and the casing tube (15;15') have cooperating respective driving means (17,20;21,22) for transferring the rotation of the guide means (16;16';16";16"';16"") to the casing tube (15;15').

2. Drill tool according to claim 1, **characterized** in that the driving means for transferring the rotation of the guide means (16;16";16"") to the casing tube (15) consists of at least one groove (17) provided in the guide means (16;16";16") and at least one tongue (20) provided on the casing tube (15), said tongue (20) being received in said groove (17).

3. Drill tool according to claim 2, **characterized** in that there are several grooves (17) and several tongues (20), said grooves (17) and tongues (20) being circumferentially spaced apart.

4. Drill tool according to claims 2 or 3, **characterized** in that the thickness of the tongue (20) in radial direction is smaller than the depth of the groove (17) in radial direction.

5. Drill tool according to claim 1, **characterized** in that the driving means for transferring the rotation of the guide means (16';16"") to the casing tube (15') consists of at least one tongue (22) provided on the guide means (16';16"") and at least one slot (21) arranged in the casing tube (15'), said tongue (22) being received in said slot (21).

6. Casing tube intended to be connected to a drill tool for rotary and/or percussive drilling comprising a drill head (10;10";10"") including a pilot means (11;11";11"") and a reamer means (12;12";12"") located behind the pilot means (11;11";11""), seen in the feed direction of the tool, guide means (16;16';16";16"';16"") to guide said drill tool relative to a casing tube (15;15') surrounding said guide means (16;16';16";16"';16""), and cooperating driving means (18,19) on the guide means (16;16';16";16"';16"") and the casing tube (15;15'), respectively, for downwards axial displacement of the casing tube (15;15'), and means for connecting said drill tool to a hammer drilling equipment, **characterized** in that the casing tube (15;15') is provided with driving means (20;21) intended to cooperate with driving means (17;22) on the guide means (16;16';16";16"';16"") to effect rotation of the casing tube (15;15').

7. A casing tube according to claim 6, **characterized** in that the driving means of the casing tube (15) is in the shape of at least one axially extending tongue (20) on the inside of the casing tube (15).

8. A casing tube according to claim 6, **characterized** in that the driving means of the casing tube (15') is in the shape of at least one axially extending slot (21) that is open in a direction from the lower end of the casing tube (15').

9. A guide means intended to guide a drill tool for rotary and/or percussive drilling relative to a casing tube (15;15') surrounding said guide means, said drill tool for rotary and/or percussive drilling comprising a drill head (10;10") including a pilot means (11;11") and a reamer means (12;12") located behind the pilot means (11;11") seen in the feed direction of the tool, and cooperating driving means (18,19) on the guide means (16;16';16";16"') and the casing tube (15;15'), respectively, for downwards axial displacement of the casing tube (15;15'), and means for connecting said drill tool to a hammer drilling equipment, **characterized** in that the guide means (16;16';16";16"') is provided with driving means (17;22) 15 intended to cooperate with driving means (20;21) of the casing tube (15;15') to effect rotation of the casing tube (15;15').

10. Guide means according to claim 9, **characterized** in that axially extending grooves (17) or axially extending tongues (22) constitute the driving means of the guide means (16;16';16";16").

Fig.1

Fig.3

Fig.2

Fig.4

## Fig.5

20

18

19

15

VI

VI

16''

17

12''

10

11''

## Fig.7

19

15'

18

22

21

17

16'''

12''

10''

11''

## Fig.6

16''

α

17

20

α

## Fig.8

α

16'''

17

21

22

α

EP 0 402 337 A2

## Fig.9

## Fig.10